# EUROPÄISCHE PATENTSCHRIFT

(11) **EP 1 618 936 B1**
(45) Veröffentlichungstag und Bekanntmachung des Hinweises auf die Patenterteilung: **11.08.2010**
(21) Anmeldenummer: 05013000.4
(22) Anmeldetag: 16.06.2005
(51) Int. Cl.: B01D 19/04

(54) **Entschäumerzusammensetzungen**
Defoaming compositions
Compositions anti-mousse

(30) Priorität: 23.07.2004 DE 102004035709
(43) Veröffentlichungstag der Anmeldung: 25.01.2006
(73) Patentinhaber: Wacker Chemie AG, 81737 München (DE)
(72) Erfinder: Rautschek, Holger, Dr., 01612 Nünchritz (DE); Herzig, Christian, Dr., 83329 Waging (DE); Becker, Richard, Dr., 84489 Burghausen (DE)
(74) Vertreter: Budczinski, Angelika

(56) Entgegenhaltungen:
- EP-A- 1 075 864

## Beschreibung

Die Erfindung betrifft Zusammensetzungen, die organische Verbindungen mit direkt an das Silicium gebundenen verzweigten und/oder cyclischen, vorzugsweise gesättigten, Alkylgruppen enthalten und deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach DE-AS 15 19 987 durch Erhitzen von hydrophiler Kieselsäure in Polydimethylsiloxanen hergestellt. Durch Anwendung von basischen Katalysatoren kann die Wirksamkeit derartiger Entschäumer verbessert werden, wie etwa in DE-OS 17 69 940 offenbart. Eine Alternative ist die Verteilung von hydrophobierter Kieselsäure in einem Polydimethylsiloxan, z.B. entsprechend DE-OS 29 25 722. Jedoch ist die Wirksamkeit der erhaltenen Entschäumer noch verbesserungswürdig. So beschreibt US-A 4,145,308 beispielsweise eine Entschäumerzubereitung, die neben einem Polydiorganosiloxan und Kieselsäure noch ein Copolymeres aus (CH₃)₃SiO_{1/2}- und SiO₂-Bausteinen enthält. Copolymere aus (CH₃)₃SiO_{1/2}- und SiO₂-Bausteinen sollen auch in Kombination mit Siloxanen, die endständige Langalkylgruppen tragen, vorteilhaft sein, wie etwa in EP-A 301 531 beschrieben. Die Verwendung von anvernetzten, zum Teil bereits gummiähnlichen Polydimethylsiloxanen soll zur Steigerung der Entschäumerwirkung beitragen. Hierzu sei beispielsweise auf US-A 2,632,736, EP-A 273 448 und

EP-A 434 060 verwiesen. Allerdings sind diese Produkte im Allgemeinen sehr hochviskos und schlecht handhabbar oder weiter verarbeitbar.

Meistens werden bevorzugt Polysiloxane mit Methylgruppen, wie Polydimethylsiloxane, eingesetzt. Obwohl Polymere mit.einer Reihe anderer aliphatischer oder aromatischer Kohlenwasserstoffgruppen am Silicium bekannt sind und in vielen Patenten auch in zur Herstellung von Entschäumern vorgeschlagen werden, gibt es nur wenig Hinweise darauf, dass man durch die Auswahl dieser Substituenten am Silicium eine wesentliche Verbesserung der Entschäumungswirkung erreichen kann. Häufig will man durch die Einbringung von langen Alkylgruppen oder Polyethersubstituenten die Verträglichkeit mit Mineralölen, welche in Entschäumerzusammensetzungen enthalten sein können, verbessern oder Siliconstörungen z.B. in Lacken vermeiden. So wird in EP-A 121 210 die Verwendung von Polysiloxanen, die Alkylgruppen mit 6-30 Kohlenstoffatomen tragen empfohlen, so dass der Anteil an Kohlenstoff, der als CH₂-Gruppe vorliegt, 30-70% beträgt, in Kombination mit Mineralöl. In den Beispielen werden vor allem Polysiloxane mit Octadecylgruppen erwähnt. In JP-A 60173068 werden Siloxane mit Oktyl- und Polyethergruppen als Entschäumer in wässrigen Druckfarben empfohlen. Siloxane mit Alkylgruppen mit mehr als 30 Kohlenstoffatomen in Kombination mit Aminosiloxanen sollen nach US-A 4,584,125 insbesondere dann vorteilhaft für die Antischaumwirkung sein, wenn der Anteil an Siloxaneinheiten, die diese Gruppierungen tragen, um 5% liegt.

In EP-A- 1 075 864 sind Entschäumerformulierungen beschrieben, die Siloxane wird mindestens einem aromatischen Rest enthalten.

Die nach dem Stand der Technik hergestellten Entschäumerformulierungen weisen jedoch in stark schäumenden tensidreichen Systemen nicht immer eine ausreichend lang anhaltende Wirksamkeit auf oder sind wegen der hohen Viskosität aufgrund des erreichten Verzweigungs- oder Vernetzungsgrades schwer handhabbar.

Gegenstand der Erfindung sind Zusammensetzungen enthaltend
(A) mindestens eine Organosiliciumverbindung, welche Einheiten der Formel

   Rₐ (R¹O)_{b}R²_{c}SiO_{(4-a-b-c)/2} (I)

   aufweist, worin
   R gleich oder verschieden sein kann und Wasserstoffatom oder Kohlenwasserstoffreste mit 1 bis 4 Kohlenstoffatomen bedeutet,
   R¹ gleich oder verschieden sein kann und ein Wasserstoffatom oder einen einwertigen, gegebenenfalls substituierten Kohlenwasserstoffrest bedeutet,
   R² gleich oder verschieden sein kann und einen einwertigen, SiC-gebundenen, gegebenenfalls substituierten, aliphatischen cyclischen oder aliphatischen verzweigten Kohlenwasserstoffrest mit mindestens 3 Kohlenstoffatomen, bedeutet,
   a 0, 1, 2 oder 3 ist,
   b 0, 1, 2 oder 3 ist,
   c 0, 1 oder 2 ist
   mit der Maßgabe, dass die Summe a+b+c≤3 ist, die Organosiliciumverbindung mindestens eine Einheit der Formel (I) aufweist mit c verschieden 0 und in mindestens 50 % aller Einheiten der Formel (I) in der Organosiliciumverbindung die Summe a+b+c gleich 2 ist,
   sowie
(B) mindestens einen Zusatzstoff ausgewählt aus
(B1) Füllstoffpartikeln und/oder
(B2) Organopolysiloxanharz aus Einheiten der Formel

   R³_{d}(R⁴O) ₑSiO_{(4-d-e)/2} (II),

   worin
   R³ gleich oder verschieden sein kann und Wasserstoffatom oder einen einwertigen, gegebenenfalls substituierten, SiC-gebundenen Kohlenwasserstoffrest bedeutet,
   R⁴ gleich oder verschieden sein kann und Wasserstoffatom oder einen einwertigen, gegebenenfalls substituierten Kohlenwasserstoffrest bedeutet,
   d 0, 1, 2 oder 3 ist und
   e 0, 1, 2 oder 3 ist,
   mit der Maßgabe, dass die Summe d+e≤3 ist und in weniger als 50 % aller Einheiten der Formel (II) im Organopolysiloxanharz die Summe d+e gleich 2 ist,
   und gegebenenfalls
(C) eine Organosiliciumverbindung, welche Einheiten der Formel

   R⁵_{g}(R⁶O)ₕSiO_{(4-g-h)/2} (III),

   aufweist, worin
   R⁵ gleich oder verschieden sein kann und Wasserstoffatom, einen einwertigen, gegebenenfalls substituierten, SiC-gebundenen aromatischen oder linearen aliphatischen Kohlenwasserstoffrest bedeutet,
   R⁶ gleich oder verschieden sein kann und Wasserstoffatom oder einen einwertigen, gegebenenfalls substituierten Kohlenwasserstoffrest bedeutet,
   g 0, 1, 2 oder 3 ist und,
   h 0, 1, 2 oder 3 ist,
   mit der Maßgabe, dass die Summe g+h≤3 ist und in mindestens 50 % aller Einheiten der Formel (III) in der Organosiliciumverbindung die Summe g+h gleich 2 ist.

Beispiele für Reste R² sind cycloaliphatische Reste,.wie Cyclobutyl-, Cyclopentyl-, Cyclohexyl-, Cycloheptyl-, Cyclooctyl-, Pinyl-, Norbornyl- und 2-Cyclohexylethylrest, sowie verzweigte aliphatische Reste, wie iso-Propyl-, 2-n-Butyl-, iso-Butyl-, tert.-Butyl-, iso-Pentyl-, neo-Pentyl-, tert.-Pentylrest, iso-Octylreste, wie der 2,2,4-Trimethyl-Pentylrest, und Neohexylreste.

Falls es sich bei Rest R² um substituierte cycloaliphatische oder verzweigte aliphatische Reste handelt, was nicht bevorzugt ist, sind als Substituenten Halogenatome, Ethergruppen, Estergruppen und Aminogruppen bevorzugt.

Bevorzugt handelt es sich bei Rest R² um cycloaliphatische Kohlenwasserstoffreste.

Falls Rest R² die Bedeutung von cycloaliphatischem Kohlenwasserstoffrest hat, handelt es sich bevorzugt um solche mit 3 bis 18 Kohlenstoffatomen, besonders bevorzugt um solche mit 5 bis 10 Kohlenstoffatomen, insbesondere um Cyclopentyl-, Cyclohexyl-, Norbornyl- und Cyclooctylreste.

Falls es sich bei Rest R² um verzweigte aliphatische Kohlenwasserstoffreste handelt, sind solche mit 3 bis 18 Kohlenstoffatomen bevorzugt und verzweigte aliphatische Kohlenwasserstoffreste mit 5 bis 10 Kohlenstoffatomen besonders bevorzugt.

Besonders bevorzugt wird Rest R² so gewählt, dass das an Silicium gebundene Kohlenstoffatom im Rest R² kein oder maximal ein Wasserstoffatom trägt. Dabei können sich Einheiten der Formel (I) mit z.B. folgender Struktur ergeben:

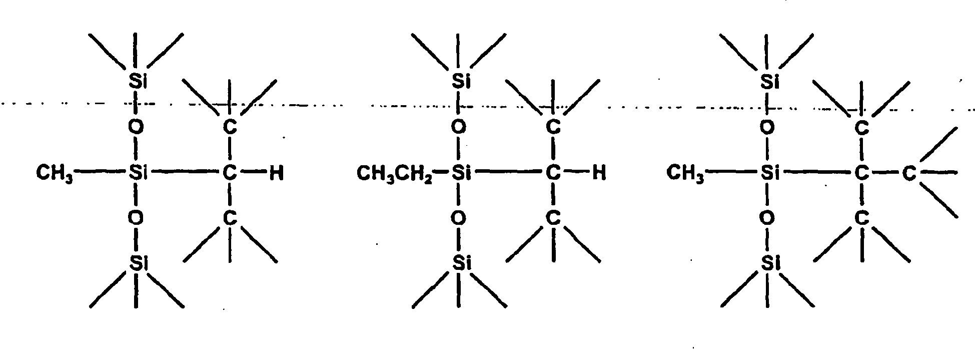

Besonders bevorzugt sind 20 bis 100 %, insbesondere 50 bis 100 %, aller Reste R² in Komponente (A) solche, bei denen das an Silicium gebundene Kohlenstoffatom kein oder maximal ein Wasserstoffatom trägt.

Beispiele für Reste R sind lineare Alkylreste, wie der Methyl-, Ethyl-, n-Propyl-, n-Butyl- und Butylrest, ; lineare Alkenylreste, wie der Vinyl- und Allylrest und lineare Alkinreste.

Bevorzugt handelt es sich bei Rest R um den Methylrest.

Beispiele für Rest R¹ sind Wasserstoffatom und die für Rest R und R² angegebenen Reste.

Bevorzugt handelt es sich bei Rest R¹ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Bevorzugt ist b gleich 0 oder 1, besonders bevorzugt 0.

Bevorzugt ist c gleich 0 oder 1.

Die als Komponente (A) eingesetzten siliciumorganischen Verbindungen enthaltend Einheiten der Formel (I) sind bevorzugt verzweigte oder lineare Organopolysiloxane, die besonders bevorzugt aus Einheiten der Formel (I) bestehen.

Im Rahmen der vorliegenden Erfindung sollen von dem Begriff Organopolysiloxane sowohl polymere, oligomere wie auch dimere Siloxane mitumfasst werden.

Der Anteil der Reste R² in Komponente (A) liegt vorzugsweise bei 5 bis 100%, besonders bevorzugt bei 10 bis 60%, insbesondere bei 15 bis 50%, jeweils bezogen auf die Gesamtanzahl der SiC-gebundenen Reste.

Bevorzugt handelt es sich bei der erfindungsgemäßen Komponente (A) um im Wesentlichen lineare Organopolysiloxane der Formel

R²_{f}R_{3-f}Si-O-[SiR₂-O-]ₓ[SiRR²-O]_{y}-SiR_{3-f}R²_{f} (IV),

wobei R und R² eine oben dafür angegebene Bedeutung haben, f gleich oder verschieden sein kann und 0 oder 1 ist, x 0 oder eine ganze Zahl ist, y eine ganze Zahl größer oder gleich 1 ist sowie die x Einheiten [SiR₂-O] und die y Einheiten [SiRR²-O] als Blöcke vorliegen oder bevorzugt statistisch im Molekül verteilt sein können.

Obwohl in Formel (IV) nicht angegeben, können diese Organopolysiloxane bis zu 10 Molprozent, bezogen auf die Summe aller Siloxaneinheiten, andere Siloxaneinheiten, wie ≡SiO_{1/2}-, -SiO_{3/2}- und SiO_{4/2}-Einheiten, enthalten.

Vorzugsweise haben weniger als 5 Mol-%, insbesondere weniger als 1 Mol-%, der Reste R, jeweils bezogen auf die Summe der Reste R und R² in Formel (IV), die Bedeutung von Wasserstoffatom.

Die Summe aus x und y bestimmt den Polymerisationsgrad des Polysiloxans (IV) und damit die Viskosität. Die Summe aus x und y liegt bevorzugt im Bereich von 2 bis 1000, besonders bevorzugt im Bereich von 10 bis 200. Das Verhältnis x/y liegt bevorzugt im Bereich von 0 bis 100, vorzugsweise im Bereich von 0 bis 20 insbesondere im Bereich von 0 bis 4.

Beispiele für die erfindungsgemäße Komponente (A) sind
Me₃Si-O- [SiMe₂-O-] ₄₀- [SiMeCyP-O] ₃₆-SiMe₃,
CyP-Me₂Si-O- [SiMe₂-O-]₁₄- [SiMeCyP-O] ₁₇-SiMe₂-CyP,
Me₃Si-O- [SiMe₂-O-] ₄₀- [SiMeCyX-O] ₃₆-SiMe₃,
Me₃Si-O- [SiMe₂-O-] ₈₆- [SiMeNB-O] ₁₈-SiMe₃,
Me₃Si-O- [SiMe₂-O-]₁₅-[SiMeNB-O]₄₅-SiMe₃,
NB-Me₂Si-O- [SiMe₂-O-] ₄₀-[SiMeNB-O] ₃₆-SiMe₂-NB,
Me₃Si-O- [SiMe₂-O-] ₂₀- [SiMeCyO-O] ₂₀-SiMe₃,
Me₃Si-O- [SiMeHex-O-] ₄₀- [SiMeCyP-O] ₁₈-SiMe₃,
Me₃Si-O- [SiMeOct-O-] ₇₅- [SiMeNB-O] ₂₅-SiMe₃,
Me₃Si-O-[SiMeIOc-O-] ₄₅- [SiMeCyH-O] ₁₅-SiMe₃,
Me₃Si-O- [SiMeIOc-O-] ₃₀- [SiMeDd-O] ₃₀-SiMe₃,
Me₃Si-O- [SiMeNeoH-O-] ₂₀- [SiMeDd-O] ₃₅-SiMe₃,
Me₃Si-O- [SiMeHex-O-] ₁₀- [SiMeCyP-O] ₁₀-SiMe₃,
Me₃Si-O-[SiMeNeoH-O-] ₁₀-[SiMeNB-O] ₁₀-SiMe₃,
Me₃Si-O- [SiMeNeoH-O-] ₅₀-SiMe₃,
Me₃Si-O-[SiMeIOc-O-]₈₀-[SiMeNB-O]₂₀-[SiMeH-O]₂-SiMe₃ und
Me₃Si-O-[SiMeOct-O-] ₁₅₀- [SiMeNB-O] ₂₀-SiMe₃,
wobei Me gleich Methylrest, CyP gleich Cyclopentyl-, CyH gleich Cyclohexyl-, NB gleich Norbornyl-, Oct gleich n-Octyl-, IOc gleich Isooctyl-, CyO gleich Cyclooctyl-, NeoH gleich Neohexyl-, Dd Dodecyl- und Hex gleich n-Hexylrest bedeuten.

Die erfindungsgemäßen Organosiliciumverbindungen (A) haben eine Viskosität von bevorzugt 10 bis 1 000 000 mPas, besonders bevorzugt von 50 bis 50 000 mPas, insbesondere von 500 bis 5 000 mPas, jeweils gemessen bei 25°C.

Die Herstellung der Organosiliciumverbindungen (A) kann nach beliebigen, in der siliciumorganischen Chemie bisher bekannten Methoden erfolgen, wie z.B. durch Cohydrolyse der entsprechenden Silane oder bevorzugt durch Hydrosilylierungsreaktion der entsprechenden Si-gebundenen Wasserstoff enthaltenden Organosiliciumverbindungen. Bei der Hydrosilylierung werden Organosiliciumverbindungen mit Si-gebundem Wasserstoff (1) mit den entsprechenden aliphatisch ungesättigten Verbindungen (2) in Gegenwart von die Anlagerung von Si-gebundenem Wasserstoff an aliphatische Mehrfachbindung (Hydrosilylierung) fördernden Katalysatoren (3) umgesetzt.

Bevorzugt handelt es sich bei den erfindungsgemäß eingesetzten Organosiliciumverbindungen mit Si-gebundenem Wasserstoff (1) um solche enthaltend Einheiten der Formel

Rₐ(R¹O)_{b}H_{c}SiO_{(4-a-b-c)/2} (V),

wobei R, R¹, a, b und c die oben dafür angegebene Bedeutung haben.

Beispiele für Verbindungen (2) mit aliphatisch ungesättigten Kohlenstoff-Kohlenstoff-Mehrfachbindungen, die erfindungsgemäß eingesetzt werden können, sind 3,3-Dimethylbut-1-en (Neohexen), 2,4,4-Trimethylpent-1-ene (Isooctene), Cyclopenten, Cyclohexen, Cycloocten, Pinen und Norbornen.

Wenn Verbindung (2) im großen Überschuss eingesetzt wird oder durch die Reaktionsführung eine selektive Reaktion erreicht wird (um z.B. eine Gelierung zu verhindern), können auch difunktionelle Olefine, wie Vinylcyclohexen, Limonen oder Dicyclopentadien, eingesetzt werden, um siliciumorganische Verbindungen mit verzweigten und oder cyclischen aliphatischen Kohlenwasserstoffresten herzustellen.

Es können auch Mischungen aus verschiedenen Verbindungen (2) eingesetzt werden, wobei auch nicht verzweigte aliphatische oder aromatische Olefine mit eingesetzt werden können, die dann z.B. zu den oben beschriebenen Resten R führen.

Beispiele für solche optional mit einsetzbaren Olefine sind Ethylen, Propylen, 1-Hexen, 1-Octen, Styren, α-Methylstyren, Dodecen und Hexadecen.

Bei den Hydrosilylierungskatalysatoren (3), die zur Herstellung der Komponente (A) eingesetzt werden können, kann es sich um alle Katalysatoren handeln, die auch bisher für Hydrosilylierungsreaktion eingesetzt wurden. Vorzugsweise handelt es sich dabei um ein Metall aus der Gruppe der Platinmetalle oder um eine Verbindung oder einen Komplex aus der Gruppe der Platinmetalle. Beispiele für solche Katalysatoren (3) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetra-methyl-disiloxankomplexe mit oder ohne Gehalt an nachweisbarem anorganisch gebundenen Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-PlatindiChlorid, γ-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird vorzugsweise in Mengen von 0,2 bis 200 Gew.-ppm (Gewichtsteilen je Million Gewichtsteilen), besonders bevorzugt in Mengen von 1 bis 50 Gew.-ppm, jeweils berechnet als elementares Platin und bezogen auf das Gesamtgewicht von Verbindung (1) und Verbindung (2) eingesetzt.

Die Umsetzung wird vorzugsweise bei einer Temperatur von 20 bis 150°C, besonders bevorzugt 40 bis 100°C, und vorzugsweise beim Druck der umgebenden Atmosphäre, also etwa bei 900 bis 1100 hPa, durchgeführt.

Da Verbindungen (2), bei höheren Temperaturen zur Polymerisation neigen können, können bei dem ersten Verfahrensschritt vorzugsweise Radikalinhibitoren, wie 4-Methoxyphenol, Phenothiazin, 2,6-Bis(tert.-butyl)-4-methylphenol, Hydrochinon oder Brenzcatechin mitverwendet werden. Falls Radikalinhibitoren eingesetzt werden, handelt es sich vorzugsweise um Mengen von 10 bis 500 Gew.-ppm, bezogen auf das Gesamtgewicht an Verbindung (1) und Verbindung (2).

Bei der Reaktion von Verbindung (1) mit Verbindung (2) können inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan. Das Lösungsmittel kann - falls erwünscht - nach der Reaktion gemeinsam mit überschüssiger Verbindung (2) destillativ entfernt werden.

Die erfindungsgemäßen Zusammensetzungen enthalten Zusatzstoff (B) in Mengen von bevorzugt 0,1 bis 30 Gewichtsteilen, besonders bevorzugt 1 bis 15 Gewichtsteilen, jeweils bezogen auf 100 Gewichtsteile Komponente (A).

Als erfindungsgemäß eingesetzten Zusatzstoff (B) kann es sich ausschließlich um Komponente (B1), ausschließlich um Komponente (B2) oder eine Mischung aus Komponenten (B1) und (B2) handeln, wobei letzteres bevorzugt ist.

Bei der Komponente (B1) handelt es sich bevorzugt um pulverförmige, vorzugsweise pulverförmige hydrophobe, Füllstoffe.

Vorzugsweise weist Komponente (B1) eine BET-Oberfläche von 20 bis 1000 m²/g, eine Partikelgröße von weniger als 10 µm und eine Agglomeratgröße von weniger als 100 µm auf.

Beispiele für die Komponente (B1) sind Siliciumdioxid (Kieselsäuren), Titandioxid, Aluminiumoxid, Metallseifen, Quarzmehl, PTFE-Pulver, Fettsäureamide z.B. Ethylenbisstearamid und fein verteilte hydrophobe Polyurethane.

Vorzugsweise werden als Komponente (B1) Siliciumdioxid (Kieselsäuren), Titandioxid oder Aluminiumoxid mit einer BET-Oberfläche von 20 bis 1000 m²/g, einer Partikelgröße von weniger als 10 µm und einer Agglomeratgröße von weniger als 100 µm eingesetzt.

Besonders bevorzugt als Komponente (B1) sind Kieselsäuren, insbesondere solche mit einer BET-Oberfläche von 50 bis 800 m²/g. Diese Kieselsäuren können pyrogene oder gefällte Kieselsäuren sein. Es sind als Komponente (B1) sowohl vorbehandelte Kieselsäuren einsetzbar, also handelsübliche hydrophobe Kieselsäuren, als auch hydrophile Kieselsäuren.

Beispiele für hydrophobe Kieselsäuren, die erfindungsgemäß eingesetzt werden können, sind HDK® H2000, eine pyrogene mit Hexamethyldisilazane behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung "Sipernat® D10" bei der Degussa AG, Deutschland).

Falls als Komponente (B1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z.B. durch mehrstündiges Erhitzen der in der Komponente (A) oder in einer Mischung aus (A) mit (B2) und/oder (C) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Eine weitere Möglichkeit ist die Verwendung einer Kombination von in situ hydrophobierten Kieselsäuren mit handelsüblichen hydrophoben Kieselsäuren.

Beispiele für Rest R³ sind Wasserstoffatom und die für Rest R⁵ und R² angegebenen Reste.

Bevorzugt handelt es sich, bei Rest R³ um gegebenenfalls substituierte Kohlenwasserstoffreste mit 1 bis 30 Kohlenstoffatomen, besonders bevorzugt um Kohlenwasserstoffreste mit 1 bis 6 Kohlenstoffatomen, insbesondere um den Methylrest.

Beispiele für Rest R⁴ sind die für den Rest R¹ angegebenen Reste.

Bevorzugt handelt es sich bei Rest R⁴ um Wasserstoffatom oder um Kohlenwasserstoffreste mit 1 bis 4 Kohlenstoffatomen, insbesondere um Wasserstoffatom, Methyl- oder Ethylreste.

Bevorzugt ist der Wert für d gleich 3 oder 0.

Bei der erfindungsgemäß gegebenenfalls eingesetzten Komponente (B2) handelt es sich bevorzugt um Siliconharze aus Einheiten der Formel (II), bei denen in weniger als 30%, bevorzugt in weniger als 5%, der Einheiten im Harz die Summe d+e gleich 2 ist.

Besonders bevorzugt handelt es sich bei Komponente (B2) um Organopolysiloxanharze, die im Wesentlichen aus R ³₃SiO_{1/2} (M)- und SiO_{4/2}(Q)-Einheiten bestehen mit R³ gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze (B2) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Komponente (B2) sind handelsübliche Produkte bzw. können nach in der Siliciumchemie gängigen Verfahren z.B. entsprechend "Parsonage, J. R.; Kendrick, D. A. (Science of Materials and Polymers Group, University of Greenwich, London, UK SE18 6PF) Spec. Publ. - R. Soc. Chem. 166, 98-106, 1995", US 2676182 oder EP-A 927 733 hergestellt werden.

Falls es sich bei dem erfindungsgemäß eingesetzten Zusatzstoff (B) um eine Mischung aus Komponenten (B1) und (B2) handelt, ist das Gewichtsverhältnis von (B1) zu (B2) in der Mischung bevorzugt 0,01 bis 50, besonders bevorzugt 0,1 bis 7.

Beispiele für Reste R⁵ sind lineare Alkylreste, wie der Methyl-, Ethyl-, n-Propyl-, n-Butyl-, Butyl-, n-Pentyl-, n-Hexylrest, n-Heptylrest, n-Octylrest, n-Nonylrest, n-Decylrest, n-Dodecylrest und n-Octadecylrest; lineare Alkenylreste, wie der Vinyl- und Allylrest; lineare Alkinreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R⁵ sind 3,3,3-Trifluor-n-propylrest, Cyanoethyl-, Glycidoxy-n-propyl-, Polyalkylenglycol-n-propyl-, Amino-n-propyl-, Aminoethylamino-n-propyl-, Methacryloxy-n-propylreste und der o-, m- und p-Chlorphenylrest.

Bevorzugt handelt es sich bei Rest R⁵ um Wasserstoffatom oder gegebenenfalls substituierte, aromatische oder lineare aliphatische Kohlenwasserstoffreste mit 1 bis 30 Kohlenstoffatomen, besonders bevorzugt um solche Kohlenwasserstoffreste mit 1 bis 4 Kohlenstoffatomen, insbesondere um den Methylrest.

Beispiele für Rest R⁶ sind Wasserstoffatom und die für Rest R⁵ und R² angegebenen Reste.

Bevorzugt handelt es sich bei Rest R⁶ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Der Wert von g ist bevorzugt 1, 2 oder 3.

Der Wert von h ist bevorzugt 0 oder 1.

Die gegebenenfalls eingesetzten Organopolysiloxane (C) haben eine Viskosität von bevorzugt 10 bis 1 000 000 mm²/s bei 25°C.

Beispiele für erfindungsgemäß gegebenenfalls eingesetzte Komponente (C) sind die für Komponente (A) angegebenen Beispiele, wobei diese siliciumorganische Verbindung keine direkt an Silicium gebundenen verzweigten und/oder cyclischen Reste R² enthält, wie etwa Polydimethylsiloxane mit Viskositäten von 100 bis 1 000 000 mPa·s bei 25°C. Diese Polydimethylsiloxane können z. B. durch den Einbau von R⁵SiO_{3/2}- oder SiO_{4/2}-Einheiten bis maximal 5% aller Einheiten verzweigt sein. Diese verzweigten oder anvernetzten Siloxane weisen dann viskoelastische Eigenschaften auf.

Bevorzugt handelt es sich bei der gegebenenfalls eingesetzten Komponente (C) um im Wesentlichen lineare Organopolysiloxane enthaltend Einheiten der Formel (III), besonders bevorzugt um Polydimethylsiloxane, die mit Silanolgruppen und/oder mit Alkoxygruppen und/oder mit Trimethylsiloxygruppen terminiert sein können oder um Siloxane mit Polyethergruppen. Derartige polyethermodifizierte Polysiloxane sind bekannt und z.B. in EP-A 1076073 beschrieben.

Insbesondere bevorzugt handelt es sich bei Komponente (C) um Organosiliciumverbindungen enthaltend Bausteine der allgemeinen Formel (III), worin R⁵ einen Methylrest und R⁶ einen linearen und/oder verzweigten Kohlenwasserstoffrest mit mindestens 6 Kohlenstoffatomen bedeuten, h einen durchschnittlichen Wert von 0,005 bis 0,5 annimmt und die Summe (g+h) einen durchschnittlichen Wert von 1,9 bis 2,1 hat. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Falls die erfindungsgemäßen Zusammensetzungen Komponente (C) enthalten, handelt es sich um Mengen von bevorzugt 1 bis 900 Gewichtsteile, besonders bevorzugt 2 bis 100 Gewichtsteile, insbesondere, 2 bis 10 Gewichtsteile, jeweils bezogen auf 100 Gewichtsteile der Komponente (A).

Komponente (C) sind handelsübliche Produkte bzw. können nach in der Siliciumchemie gängigen Verfahren hergestellt werden.

Außer den Komponenten (A), (B) und gegebenenfalls (C) können die erfindungsgemäßen Zusammensetzungen alle weiteren Stoffe enthalten, wie sie auch bisher in Entschäumerformulierungen verwendet worden sind, wie z.B. wasserunlösliche organische Verbindungen (D).

Unter dem Begriff "wasserunlöslich" soll im Sinne der vorliegenden Erfindung eine Löslichkeit in Wasser bei 25°C und einem Druck von 1013,25 hPa von maximal 2 Gewichtsprozent verstanden werden.

Bei der gegebenenfalls eingesetzten Komponente (D) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Estern der Phosphorsäure und Wachsen.

Die erfindungsgemäßen Zusammensetzungen enthalten wasserunlösliche organische Verbindung (D) in Mengen von bevorzugt 0 bis 1000 Gewichtsteilen, besonders bevorzugt 0 bis 100 Gewichtsteilen, jeweils bezogen auf 100 Gewichtsteile des Gesamtgewichts der Komponenten (A), (B) und gegebenenfalls (C) .

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zusammensetzungen um solche, die
(A) mindestens eine Organosiliciumverbindung der Formel (IV),
(B) mindestens einen Zusatzstoff ausgewählt aus
(B1) Füllstoffpartikeln und/oder
(B2) Organopolysiloxanharz aus Einheiten der Formel (II), gegebenenfalls
(C) Organosiliciumverbindungen enthaltend Einheiten der Formel (III) und ,
   gegebenenfalls
(D) wasserunlösliche organische Verbindung
enthalten.

Besonders bevorzugt handelt es sich bei den erfindungsgemäßen Zusammensetzungen um solche, die aus
(A) 100 Gewichtsteilen einer Organosiliciumverbindung der Formel (IV),
(B) 0,1 bis 30 Gewichtsteilen eines Zusatzstoffs ausgewählt aus
(B1) Füllstoffpartikeln und/oder
(B2) Organopolysiloxanharz aus Einheiten der Formel (II), gegebenenfalls
(C) Organosiliciumverbindungen enthaltend Einheiten der Formel (III) und
   gegebenenfalls
(D) wasserunlösliche organische Verbindung
bestehen.

Die erfindungsgemäßen Zusammensetzungen sind bevorzugt viskose klare bis opake, farblose bis bräunliche Flüssigkeiten.

Die erfindungsgemäßen Zusammensetzungen haben vorzugsweise eine Viskosität von 10 bis 2 000 000 mPas insbesondere von 2 000 bis 50 000 mPas, jeweils bei 25°C.

Bei den erfindungsgemäßen Zusammensetzungen kann es sich um Lösungen, Dispersionen oder Pulver handeln.

Das Herstellen der erfindungsgemäßen Zusammensetzungen kann nach bekannten Verfahren, wie z.B. durch Mischen aller Komponenten erfolgen, wie z.B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z.B. in hochdispersen Füllstoffen enthalten ist, zu verhindern. Im Anschluss kann bei Bedarf die in situ Hydrophobierung der Füllstoffe erfolgen.

Falls es sich bei den erfindungsgemäßen Zusammensetzungen um Emulsionen handelt, können alle Emulgatoren eingesetzt werden, die dem Fachmann zur Herstellung von Siliconemulsionen bekannt sind, wie z.B. anionische, kationische oder nichtionogene Emulgatoren. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane sowie Konservierungsmittel und andere übliche und dem Fachmann bekannte Zusätze zugesetzt werden.

Die kontinuierliche Phase der erfindungsgemäßen Emulsionen ist vorzugsweise Wasser. Es können jedoch auch erfindungsgemäße Zusammensetzungen in Form von Emulsionen hergestellt werden, bei denen die kontinuierliche Phase durch die Komponenten (A), (B) und gegebenenfalls (C) gebildet oder durch Komponente (D) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und gegebenenfalls anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen enthaltend 5 bis 50 Gew.-% Komponenten (A) bis (D), 1 bis 20 Gew.-% Emulgatoren und Verdicker und 30 bis 94 Gew.-% Wasser bevorzugt.

Die erfindungsgemäßen Zusammensetzungen können auch als frei fließende Pulver formuliert werden. Diese sind z.B. bei der Anwendung in pulverförmigen Waschmitteln bevorzugt. Die Herstellung dieser Pulver ausgehend von der Mischung der Komponenten (A), (B), gegebenenfalls (C) und gegebenenfalls (D) erfolgt nach dem Fachmann bekannten Verfahren, wie Sprühtrocknung oder Aufbaugranulation unter Verwendung von dem Fachmann bekannten Zusätzen.

Die erfindungsgemäßen Pulver enthalten bevorzugt 2 bis 20 Gewichts-% Komponenten (A) bis (D). Als Träger kommen z.B. Zeolithe, Natriumsulfat, Cellulosederivate, Harnstoff und Zucker zum Einsatz. Weitere Bestandteile der erfindungsgemäßen Pulver können z.B. Wachse sein oder organischen Polymere, wie sie z.B. in EP-A 887097 und EP-A 1060778 beschrieben sind.

Ein weiterer Gegenstand der vorliegenden Erfindung sind Wasch- und Reinigungsmittel, enthaltend die erfindungsgemäßen Zusammensetzungen.

Die erfindungsgemäßen Zusammensetzungen können überall eingesetzt werden, wo Zusammensetzungen auf der Basis von Organosiliciumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder Schaumverhinderung von Medien, dadurch gekennzeichnet, dass die erfindungsgemäße Zusammensetzung dem Medium zugegeben wird.

Der Zusatz der erfindungsgemäßen Zusammensetzung zu den schäumenden Medien kann direkt erfolgen, mit geeigneten Lösungsmitteln, wie z.B. Toluol, Xylol, Methylethylketon oder t-Butanol, verdünnt, als Pulver oder als Emulsion. Die zur Erzielung der gewünschten Entschäumerwirkung notwendige Menge ist variabel und richtet sich z.B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum schäumenden Medium zugegeben.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt bzw. das erfindungsgemäße Verfahren dort durchgeführt werden, wo störender Schaum verhindert oder zerstört werden soll. Das ist z.B. in nichtwässrigen Medien wie bei der Teerdestillation oder der Erdölverarbeitung der Fall sowie in wässrigen Medien. Insbesondere geeignet sind die erfindungsgemäßen Entschäumerzusammensetzungen bzw. das erfindungsgemäße Verfahren zur Bekämpfung von Schaum in wässrigen Medien, wie z.B. in wässrigen Tensidsystemen, wie die Anwendung in Wasch- und Reinigungsmitteln, die Bekämpfung von Schaum in Abwasseranlagen, bei Textilfärbeverfahren, bei der Erdgaswäsche, in Polymerdispersionen, oder zum Entschäumen von bei der Zellstoffherstellung anfallenden wässrigen Medien.

Die erfindungsgemäßen Zusammensetzungen haben den Vorteil, dass sie als Entschäumer leicht handhabbar sind, und dass sie sich durch eine hohe., lang anhaltende Wirksamkeit in unterschiedlichsten Medien bei geringen Zusatzmengen auszeichnen. Das ist sowohl ökonomisch als auch ökologisch außerordentlich vorteilhaft.

Die erfindungsgemäßen Zusammensetzungen haben den Vorteil, dass sie auch in Medien verwendet werden können, die z.B. als Lacke oder Klebstoffe eingesetzt werden sollen.

Das erfindungsgemäße Verfahren hat den Vorteil, dass es einfach in der Durchführung und sehr wirtschaftlich ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Im Folgenden werden die Abkürzungen Me gleich Methylrest, CyP gleich Cyclopentyl, NB gleich Norbornyl, Oct gleich n-Octyl, IOc gleich Isooctyl, NeoH gleich Neohexyl, Dd Dodecyl, und Hex gleich n-Hexyl verwendet.

### Prüfungen der Entschäumerwirksamkeit

### 1. Antischaumkennzahl AKZ

In einer Vorrichtung entsprechend DE-A 25 51 260 werden 200 ml einer 4 Gew.-%igen wässrigen Lösung eines Natriumalkylsulfonates (Mersolat), die 10 mg des zu untersuchenden Entschäumers (gelöst in der 10-fachen Menge an Methyl-Ethyl-Keton) enthält, 1 Minute mit zwei gegenläufigen Rührern aufgeschäumt. Anschließend wird der Schaumzerfall aufgezeichnet. Aus der Fläche der Auftragung Schaumhöhe gegen die Zeit wird die Antischaumkennzahl berechnet. Je niedriger diese Zahl ist, desto wirksamer ist der Entschäumer.

### 2. Rührtest

300 ml einer Lösung, die 1 Gew.-% eines entschäumerfreien Waschpulvers enthält, wurde 5 Minuten mit einem Rührer bei einer Geschwindigkeit von 1000 Umdrehungen/min aufgeschäumt. Anschließend wurden 100 µl einer 10 Gew.-%igen Lösung des Entschäumers in Methylethylketon zugegeben und das Rühren weitere 25 Minuten fortgesetzt. Während der gesamten Zeit wird die Schaumhöhe aufgezeichnet.
Als Maß für die Wirksamkeit wird die durchschnittliche Schaumhöhe bezogen auf die Schaumhöhe ohne Entschäumer nach 2-3 Minuten berechnet. Je niedriger dieser Wert ist, desto wirksamer ist der Entschäumer.

### 3. Test in der Waschmaschine

Zu 100 g des entschäumerfreien Waschpulvers wurden 0,1 g Entschäumer gegeben. Das Waschpulver wurde dann gemeinsam mit 3500 g sauberer Baumwollwäsche in eine Trommelwaschmaschine (Typ Miele Novotronic W918 ohne Fuzzy Logic) gegeben. Anschließend wird das Waschprogramm gestartet und die Schaumhöhe über einen Zeitraum von 55 Minuten aufgezeichnet. Aus den über den Gesamtzeitraum ermittelten Schaumnoten (0 kein Schaum messbar bis 6 Überschäumen) wird die durchschnittliche Schaumnote bestimmt. Je niedriger diese ist, desto wirksamer ist der Entschäumer über den gesamten Zeitraum.

### Herstellung der Organosiliciumverbindungen A1 bis A6 und VA1 und VA2

### A1: 132 g eines Polysiloxans der Formel

Me₃Si-O-[MeHSi-O-]₄₀[SiMe₂-O]₄₀-SiMe₃ , wobei die einzelnen Einheiten statistisch im Molekül verteilt sein können, werden mit 100 g Norbornen in Gegenwart von 9100 g Toluol und 1 g Platinkatalysator (Platin-1,3-Divinyl-1,1,3,3-tetramethyldisiloxan-Komplex nach Karstedt mit einem Gehalt von 1 Gew.-% Platin) bei Temperaturen zwischen 60 und 80°C umgesetzt. Nach Abtrennen der flüchtigen Bestandteile der Reaktionsmischung wurden 215 g eines klaren Öles mit eine Viskosität von 18 800 mPas erhalten. Nach der ²⁹Si-NMR-Analyse hatte dieses Öl folgende Struktur: Me₃Si-O- [MeHSi-O-] ₂- [MeNBSi-O-] ₃₈ [SiMe₂-O] ₄₀-SiMe₃.

### A2: 65 g eines Polysiloxans der Formel

Me₃Si-O-[MeHSi-O-]₆₀-SiMe₃ werden in Gegenwart von 0,5 g Platinkatalysator (Platin-1,3-Divinyl-1,1,3,3-tetramethyldisiloxan-Komplex nach Karstedt mit einem Gehalt von 1 Gew.-% Platin) bei Temperaturen zwischen 60 und 80°C zuerst mit 22 g Cyclopenten und anschließend mit 112 g n-Octen umgesetzt. Nach Filtration und Abtrennen der flüchtigen Bestandteile der Reaktionsmischung wurden 140 g eines klaren Öles mit eine Viskosität von 4250 mPas erhalten. Nach der ²⁹Si-NMR-Analyse hatte dieses Öl folgende Struktur:
Me₃Si-O-[SiMeCyP-O-]₁₈[SiMeOct-O]₄₂-SiMe₃, wobei die einzelnen Einheiten statistisch im Molekül verteilt sein können.

Nach analogen Verfahren wurden folgende Organosiliciumverbindungen hergestellt:
**A3:** Me₃Si-O-[SiMeDd-0-]₃₀[SiMeNeoH-O]₃₀-SiMe₃ (Viskosität 737 mPas), wobei die einzelnen Einheiten statistisch im Molekül verteilt sein können;
**A4:** CypMe₂Si-O-[SiMe₂-O-]₁₄[SiMeCyp-O]₁₇-SiMe₂CyP (Viskosität 570 mPas), wobei die einzelnen Einheiten statistisch im Molekül verteilt sein können;
**A5:** Me₃Si-O-[SiMeNB-O-]₁₂[SiMeIOc-O]₄₅[SiMeHex-O]₃-SiMe₃ (Viskosität 18900 mPas), wobei die einzelnen Einheiten statistisch im Molekül verteilt sein können;
**A6:** Me₃Si-O-[SiMeNB-O-]₄[SiMeOct-O]₁₆-SiMe₃ (Viskosität 407 mPas), wobei die einzelnen Einheiten statistisch im Molekül verteilt sein können;
**VA1:** Me₃Si-O-[SiMe₂-O-]₃₈[SiMeOct-O]₄₀-SiMe₃ (Viskosität 464 mPas), wobei die einzelnen Einheiten statistisch im Molekül verteilt sein können;
**VA2:** Me₃Si-O-[SiMeDd-O-]₃₀[SiMeHex-O]₃₀-SiMe₃ (Viskosität 415 mPas), wobei die einzelnen Einheiten statistisch im Molekül verteilt sein können.

### Beispiele 1 bis 6

Es wurden die folgenden Komponenten verwendet:
**B11:** pyrogene Kieselsäure mit einer BET-Oberfläche von 400 m²/g, käuflich erhältlich bei der Wacker-Chemie GmbH unter der Bezeichnung HDK® T40.
**B12:** mit Polydimethylsiloxan vorbehandelte Kieselsäure mit einer BET-Oberfläche von 90 m²/g und einer mittleren Teilchengröße von 5µm (käuflich erhältlich bei Degussa AG, Deutschland unter der Bezeichnung SIPERNAT® D10);
**B21**: bei Raumtemperatur festes Siliconharz bestehend aus folgenden Einheiten (nach ²⁹Si-NMR und IR-Analyse): 40 mol-% CH₃SiO_{1/2}-, 50 mol-% SiO_{4/2}-, 8 mol-% C₂H₅OSiO_{3/2}- und 2 mol-% HO-SiO_{3/2}-. Dieses Harz hatte eine gewichtsmittlere Molmasse von 7900g/mol (bezogen auf Polystyrolstandard).
**C1:** ein Polydimethylsiloxan mit α,ω-endständigen Alkoxygruppen der Formel CH₃(CH₂)₁₉-O- und einer Viskosität von 100 mPas.

Die in Tabelle 1 angegebenen Komponenten werden mit einem Dissolver vermischt und in Gegenwart von 1500 ppm KOH (als 20%ige Lösung in Methanol) 4 Stunden auf 150°C erhitzt und nach Abkühlen noch mal mit dem Dissolver homogenisiert.

**Tabelle 1:**

| | | | | |
|---|---|---|---|---|
| Beispiele 1 | 90 Teile A1 | 5 Teile B11 | 5 Teile B2 | - |
| Beispiele 2 | 88 Teile A2 | 6 Teile B11 | 2 Teile B2 | 4 Teile C |
| Beispiele 3 | 90 Teile A3 | 5 Teile B11 | 5 Teile B2 | - |
| Beispiele 4 | 90 Teile A4 | 3 Teile B11 und 2 Teile B12 | 2 Teile B2 | 3 Teile C |
| Beispiele 5 | 92 Teile A5 | 5 Teile B11 | 3 Teile B2 | - |
| Beispiele 6 | 90 Teile A6 | 6 Teile B12 | 4 Teile B2 | - |

In allen Beispielen werden viskose, opake Mischungen mit den folgenden Viskositäten erhalten:
Beispiel 1: 105000 mPas
Beispiel 2: 50400 mPas
Beispiel 3: 6400 mPas
Beispiel 4: 3200 mPas
Beispiel 5: 72000 mPas
Beispiel 6: 2160 mPas

Die so erhaltenen Zusammensetzungen wurden nun hinsichtlich der Antischaumkennzahl AKZ, des Rührtests und des Tests in der Wachmaschine überprüft. Die Ergebnisse dieser Tests sind in Tabelle 3 zusammengefasst.

### Vergleichsbeispiele

**V1:** Eine Entschäumergrundlage wird durch Vermischen von 2,5 Teilen eines Kondensationsproduktes mit einer Viskosität von 180 mPas hergestellt aus Octyldodecanol und einem mit Silanolgruppen terminierten Polydimethylsiloxans mit einer Viskosität von 40 mPas und 5 Teilen einer 50%-igen toluolischen Lösung eines Siliconharzes aus 40 mol-% Trimethylsiloxygruppen und 60 mol% SiO_{4/2}-Gruppen und anschließendem Entfernen der flüchtigen Bestandteile hergestellt.

Eine Mischung aus 89,3 Gewichtsteilen eines Trimethylsiloxygruppen terminierten Polydimethylsiloxans mit einer Viskosität von 1000 mPas bei 25°C (erhältlich bei der Wacker-Chemie GmbH, Deutschland unter der Bezeichnung "Siliconöl AK 5000"), 5 Gewichtsteilen der oben erwähnten Entschäumergrundlage, 5 Teilen hydrophilen pyrogenen Kieselsäure mit einer BET-Oberfläche von 300 m²/g (erhältlich bei der Wacker-Chemie GmbH, Deutschland unter der Bezeichnung HDK® T30) und 0,7 Gewichtsteilen einer methanolischen KOH werden 2 h bei 150°C erhitzt. Es wurde ein Antischaummittel mit einer Viskosität von 25600 mPas erhalten.

**V2:** Ein verzweigtes Polyorganosiloxan wird durch die Umsetzung von 378 g eines mit Trimethylsiloxygruppen terminierten Polydimethylsiloxans mit einer Viskosität von 1000 mPas bei 25°C (erhältlich bei der Wacker-Chemie GmbH, Deutschland unter der Bezeichnung "Siliconöl AK 1000"), 180 g eines mit Silanolgruppen terminierten Polydimethylsiloxans mit einer Viskosität von 10000 mPas bei 25°C (erhältlich bei der Wacker-Chemie GmbH, Deutschland unter der Bezeichnung "Polymer FD 10") und 18 g E-thylsilicat (erhältlich bei der Wacker-Chemie GmbH, Deutschland unter der Bezeichnung "SILIKAT TES 40") in Gegenwart von 0,3 g KOH durch Erhitzen auf 140°C hergestellt. Anschließend werden 30 g einer hydrophilen pyrogenen Kieselsäure mit einer BET-Oberfläche von 200 m²/g (erhältlich bei der Wacker-Chemie GmbH, Deutschland unter der Bezeichnung HDK® N20) und 30 g eines mit Silanolgruppen terminierten Polydimethylsiloxans mit einer Viskosität von 40 mPas zugegeben und die Mischung wird weitere 4h auf 180°C erhitzt und bei 50 hPa von flüchtigen Bestandteilen befreit. Es wurde eine viskose farblose Entschäumerformulierung mit einer Viskosität von 68640 mPas erhalten.

**V3 und V4** wurden analog der Beispiel 1 bis 6 hergestellt, wobei die Edukte und.die Einsatzmengen Tabelle 2 entnommen werden können.

**Tabelle 2:**

| | | | |
|---|---|---|---|
| Vergleichsbeispiel 3 | 90 Teile VA1 | 5 Teile B11 | 5 Teile B2 |
| Vergleichsbeispiel 4 | 90 Teile VA2 | 5 Teile B11 | 5 Teile B2 |

In den Vergleichsbeispielen werden Mischungen mit den folgenden Viskositäten erhalten:
Vergleichsbeispiel V3: 7200 mPas
Vergleichsbeispiel V4: 2600 mPas

Die so erhaltenen Zusammensetzungen wurden nun hinsichtlich der Antischaumkennzahl AKZ, des Rührtests und des Tests in der Wachmaschine überprüft. Die Ergebnisse dieser Tests sind in Tabelle 3 zusammengefasst.

**Tabelle 3:**

| Beispiel | Antischaumkennzahl AKZ | Rührtest durchschnittliche Schaumhöhe in % | Waschmaschinentest Durchschnittliche Schaumnote |
|---|---|---|---|
| V1 | 682 | 58 | 3,3 |
| V2 | 1612 | 75 | 4,4 |
| V3 | 52 | 71 | 4,8 |
| V4 | 187 | 39 | 3,7 |
| Beispiel 1 | 697 | 55 | 0,7 |
| Beispiel 2 | 227 | 37 | 0,2 |
| Beispiel 3 | 52 | 41 | 1,2 |
| Beispiel 4 | 67 | 38 | 1,1 |
| Beispiel 5 | 375 | 37 | 1,0 |
| Beispiel 6 | 77 | 31 | 0,8 |

Bei den Vergleichversuchen V1 bis V4 kam es im Verlauf der Prüfung in der Waschmaschine zu einem Überlaufen der Waschflotte.
Die Antischaummittel gemäß den Beispielen 1 bis 6 zeigen in der Langzeitwirkung beim Rührtest und in der Waschmaschine hervorragende Ergebnisse.

### Beispiel 7

90 Teile Me₃Si-O-[SiMeNB-O-]₄[SiMeOct-_{O}]₁₆-SiMe₃, wobei die einzelnen Einheiten statistisch im Molekül verteilt sein können (Viskosität 407 mPas), 5 Teile einer pyrogene Kieselsäure mit einer BET-Oberfläche von 400 m²/g, (erhältlich bei der Wacker-Chemie GmbH unter der Bezeichnung HDK® T40) und 5 Teile eines bei Raumtemperatur festen' Siliconharzes bestehend aus folgenden Einheiten (nach ²⁹Si-NMR und IR-Analyse) : 40 mol-% CH₃SiO_{1/2}-, 50 mol- % SiO_{4/2}-, 8 mol- % C₂H₅OSiO_{3/2}- und 2 mol- % HOSiO_{3/2}- mit einer gewichtsmittlere Molmasse von 7900 g/mol werden in Gegenwart von 1500 ppm KOH 4 h auf 150°C erhitzt.

Es werden 100 Teile einer Entschäumerformulierung erhalten. Diese werden bei 60°C mit 30 Teilen Sorbitanmonostearat (erhältlich unter der Bezeichnung Span 60" bei Uniqema) und 20 Teile Polyoxyethylen(20)sorbitanmonostearate (erhältlich unter der Bezeichnung "Tween 60" bei Uniqema) vermischt und schrittweise mit 500 Teilen Wasser verdünnt. Zu dieser Mischung werden 2 Teile einer Polyacrylsäure (erhältlich unter der Bezeichnung "Carbopol 934" bei BF Goodrich) gegeben, vermischt und weitere 345 Teile Wasser und 3 Teile eines Konservierungsmittels auf Isothiazolinonbasis (erhältlich unter der Bezeichnung "Acticide MV" bei der Thor-Chemie Speyer) zugegeben. Anschließend wird die Emulsion bei 100 bar mit einem Hochdruckhomogenisator homogenisiert und mit 10%iger NaOH auf einen pH-Wert von 6-7 eingestellt.
Die erhaltene Entschäumeremulsion war hervorragend geeignet, um wässrige Polymerdispersionen zu entschäumen. Diese Polymerdispersionen weisen bei der Anwendung in Dispersionsfarben keine Verlaufsstörungen auf.

### Beispiel 8

90 Teile Me₃Si-O-[MeHSi-O-]₄₀[SiMe₂-O]₄₀-SiMe₃, wobei die einzelnen Einheiten statistisch im Molekül verteilt sein können, 5 Teile einer pyrogene Kieselsäure mit einer BET-Oberfläche von 400 m²/g (erhältlich bei der Wacker-Chemie GmbH unter der Bezeichnung HDK® T40) und 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}- mit einer gewichtsmittleren Molmasse von 7900 g/mol werden in Gegenwart von 1500 ppm KOH 4 h auf 150°C erhitzt.

35 ml einer 2 %igen Lösung eines hochmolekularen Copolymers aus Acrylsäure, Methacrylsäurestearat und Pentaerythritoldiallylether (im Verhältnis 100:2:0,3) (die, wenn sie neutralisiert wird, eine Viskosität von 17 500 mm²/s aufweist) wurden in einem Becherglas vorgelegt, und unter intensivem Mischen mit einem Flügelrührer wurden 10 g der obengennanten Entschäumerformulierung langsam zugegeben, so dass nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g (erhältlich bei der Wacker-Chemie GmbH unter der Bezeichnung HDK® N20) zugemischt.
Es wurde ein weißes, rieselfähiges Pulver erhalten. Dieses wurde mit Erfolg zur Schaumverhinderung in pulverförmigen Waschmitteln oder in pulverförmigen Pflanzenschutzkonzentraten eingesetzt.

## Patentansprüche

1. Zusammensetzungen enthaltend
(A) mindestens eine Organosiliciumverbindung, welche Einheiten der Formel
Rₐ(R¹O)_{b}R²_{c}SiO_{(4-a-b-c)/2} (I)
aufweist, worin.
R gleich oder verschieden sein kann und Wasserstoffatom oder Kohlenwasserstoffreste mit 1 bis 4 Kohlenstoffatomen bedeutet,
R¹ gleich oder verschieden sein kann und ein Wasserstoffatom oder einen einwertigen, gegebenenfalls substituierten Kohlenwasserstoffrest bedeutet,
R² gleich oder verschieden sein kann und einen einwertigen, SiC-gebundenen, gegebenenfalls substituierten, aliphatischen cyclischen oder aliphatischen verzweigten Kohlenwasserstoffrest mit mindestens 3 Kohlenstoffatomen, bedeutet,
a 0, 1, 2 oder 3 ist,
b 0, 1, 2 oder 3 ist,
c 0, 1 oder 2 ist
mit der Maßgabe, dass die Summe a+b+c≤3 ist, die Organosiliciumverbindung mindestens eine Einheit der Formel (I) aufweist mit c verschieden 0 und in mindestens 50 % aller Einheiten der Formel (I) in der Organosiliciumverbindung die Summe a+b+c gleich 2 ist,
sowie
(B) mindestens einen Zusatzstoff ausgewählt aus
(B1) Füllstoffpartikeln und/oder
(B2) Organopolysiloxanharz aus Einheiten der Formel
R³_{d}(R⁴O)ₑSiO_{(4-d-e)/2} (II),
worin
R³ gleich oder verschieden sein kann und Wasserstoffatom oder einen einwertigen, gegebenenfalls substituierten, SiC-gebundenen Kohlenwasserstoffrest bedeutet,
R⁴ gleich oder verschieden sein kann und Wasserstoffatom oder einen einwertigen, gegebenenfalls substituierten Kohlenwasserstoffrest bedeutet,
d 0, 1, 2 oder 3 ist und
e 0, 1, 2 oder 3 ist,
mit der Maßgabe, dass die Summe d+e≤3 ist und in weniger als 50 % aller Einheiten der Formel (II) im Organopolysiloxanharz die Summe d+e gleich 2 ist.

2. Zusammensetzungen gemäß Anspruch 1, **dadurch gekennzeichnet, dass** es sich bei R² um cycloaliphatische Kohlenwasserstoffreste handelt.

3. Zusammensetzungen gemäß Anspruch 1 oder 2, **dadurch gekennzeichnet, dass** der Anteil der Reste R² in Komponente (A) bei 5 bis 100 % liegt, bezogen auf die Gesamtanzahl der SiC-gebundenen Reste.

4. Zusammensetzungen gemäß einem oder mehreren der Ansprüche 1 bis 3, **dadurch gekennzeichnet, dass** es sich bei Komponente (A) um im Wesentlichen lineare Organopolysiloxane der Formel
R²_{f}R_{3-f}Si-O-[SiR₂-O-]ₓ[SiRR²-O]_{y}-SiR₃-_{f}R²_{f} (IV)
handelt,
wobei R und R² eine in Anspruch 1 angegebene Bedeutung haben, f gleich oder verschieden sein kann und 0 oder 1 ist, x 0 oder
eine ganze Zahl ist, y eine ganze Zahl größer oder gleich 1 ist sowie die x Einheiten [SiR₂-O] und die y Einheiten [SiRR²-O] als Blöcke vorliegen oder statistisch im Molekül verteilt sein können.

5. Zusammensetzungen gemäß einem oder mehreren der Ansprüche 1 bis 4, **dadurch gekennzeichnet, dass** es sich bei der Komponente (B1) um pulverförmige Füllstoffe handelt.

6. Zusammensetzungen gemäß einem oder mehreren der Ansprüche 1 bis 5, **dadurch gekennzeichnet, dass** es sich bei Komponente (B2) um Siliconharze aus Einheiten der Formel (II) handelt, bei denen in weniger als 30% der Einheiten im Harz die Summe d+e gleich 2 ist.

7. Zusammensetzungen gemäß einem oder mehreren der Ansprüche 1 bis 6, **dadurch gekennzeichnet, dass** es sich bei den Zusammensetzungen um solche handelt, die
(A) mindestens eine Organosiliciumverbindung der Formel (IV), sowie
(B) mindestens einen Zusatzstoff ausgewählt aus
(B1) Füllstoffpartikeln und/oder
(B2) Organopolysiloxanharz aus Einheiten der Formel (II), enthalten.

8. Wasch- und Reinigungsmittel, enthaltend die Zusammensetzungen gemäß einem oder mehreren der Ansprüche 1 bis 7.

9. Verfahren zum Entschäumen und/oder zur Schaumverhinderung von Medien, **dadurch gekennzeichnet, dass** die Zuaammensetzung gemäß einem oder mehreren der Ansprüche 1 bis 7 dem Medium zugegeben wird.

10. Verfahren nach Anspruch 9, **dadurch gekennzeichnet, dass** die Zusammensetzung in Mengen von 0,1 Gew.-ppm bis 1 Gew.-% zum schäumenden Medium zugegeben wird.

## Claims

1. Compositions comprising
(A) at least one organosilicon compound which has units of the formula
Rₐ(R¹O)_{b}R²_{c}SiO_{(4-a-b-c)/2} (I)
in which
R can be identical or different and denotes hydrogen atom or hydrocarbon radicals having 1 to 4 carbon atoms,
R¹ can be identical or different and denotes a hydrogen atom or a monovalent, optionally substituted hydrocarbon radical,
R² can be identical or different and denotes a monovalent, SiC-bonded, optionally substituted, aliphatic cyclic or aliphatic branched hydrocarbon radical having at least 3 carbon atoms,
a is 0, 1, 2 or 3,
b is 0, 1, 2 or 3,
c is 0, 1 or 2
with the proviso that the sum a+b+c≤3, the organosilicon compound has at least one unit of the formula (I) with c other than 0, and in at least 50% of all of the units of the formula (I) in the organosilicon compound the sum a+b+c is 2,
and also
(B) at least one additive selected from
(B1) filler particles and/or
(B2) organopolysiloxane resin made up of units of the formula
R³_{d}(R⁴O)ₑSiO_{(4-d-e)/2} (II)
in which
R³ can be identical or different and denotes hydrogen atom or a monovalent, optionally substituted, SiC-bonded hydrocarbon radical,
R⁴ can be identical or different and denotes hydrogen atom or a monovalent, optionally substituted hydrocarbon radical,
d is 0, 1, 2 or 3 and
e is 0, 1, 2 or 3,
with the proviso that the sum d+e≤3 and in less than 50% of all of the units of the formula (II) in the organopolysiloxane resin the sum d+e is 2.

2. Compositions according to Claim 1, **characterized in that** R² comprises cycloaliphatic hydrocarbon radicals.

3. Compositions according to Claim 1 or 2, **characterized in that** the fraction of radicals R² in component (A) is 5% to 100%, based on the total number of SiC-bonded radicals.

4. Compositions according to one or more of Claims 1 to 3, **characterized in that** component (A) comprises substantially linear organopolysiloxanes of the formula
R²_{f}R_{3-f}Si-O-[SiR₂O-]ₓ[SiRR²-O]_{y}-SiR_{3-f}R²_{f} (IV)
where R and R² are as defined in Claim 1, f can be identical or different and is 0 or 1, x is 0 or an integer, y is an integer greater than or equal to 1 and the x units [SiR₂-O] and the y units [SiRR²-O] can be present as blocks or can be distributed randomly in the molecule.

5. Compositions according to one or more of Claims 1 to 4, **characterized in that** component (B1) comprises pulverulent fillers.

6. Compositions according to one or more of Claims 1 to 5, **characterized in that** component (B2) comprises silicone resins made up of units of the formula (II) for which in less than 30% of the units in the resin the sum d+e is 2.

7. Compositions according to one or more of Claims 1 to 6, **characterized in that** the compositions are those which comprise
(A) at least one organosilicon compound of the formula (IV),
and
(B) at least one additive selected from
(B1) filler particles and/or
(B2) organopolysiloxane resin made up of units of the formula (II).

8. Detergent comprising the compositions according to one or more of Claims 1 to 7.

9. Method of defoaming media and/or preventing foam therein, **characterized in that** the composition according to one or more of Claims 1 to 7 is added to the medium.

10. Method according to Claim 9, **characterized in that** the composition is added in amounts of 0.1 ppm by weight to 1% by weight to the foaming medium.

## Revendications

1. Compositions contenant
(A) au moins un composé organosilicié contenant des unités de formule
Rₐ(R¹O)_{b}R²_{c}SiO_{(4-a-b-c)/2} (I)
où
les radicaux R peuvent être identiques ou différents et signifient un atome d'hydrogène ou des radicaux hydrocarbonés comprenant 1 à 4 atomes de carbone,
R¹ peut être identique ou différent et signifie un atome d'hydrogène ou un radical hydrocarboné monovalent, le cas échéant substitué,
R² peut être identique ou différent et signifie un radical hydrocarboné aliphatique cyclique ou aliphatique ramifié, monovalent, lié par SiC, le cas échéant substitué, comprenant au moins 3 atomes de carbone,
a vaut 0, 1, 2 ou 3,
b vaut 0, 1, 2 ou 3,
c vaut 0, 1 ou 2
à condition que la somme a + b + c ≤ 3, que le composé organosilicié présente au moins une unité de formule (I) avec c différent de 0 et que dans au moins 50% de toutes les unités de formule (I) dans le composé organosilicié, la somme a + b + c soit égale à 2,
et
(B) au moins un additif choisi parmi
(B1) des particules de charge et/ou
(B2) une résine d'organopolysiloxane d'unités de formule
R³_{d}(R⁴O)ₑSiO_{(4-d-e)/2} (II),
où
R³ peut être identique ou différent et signifie un atome d'hydrogène ou un radical hydrocarboné monovalent, lié par SiC, le cas échéant substitué,
R⁴ peut être identique ou différent et signifie un atome d'hydrogène ou un radical hydrocarboné monovalent, le cas échéant substitué,
d vaut 0, 1, 2 ou 3 et
e vaut 0, 1, 2 ou 3,
à condition que la somme d + e ≤ 3 et que dans moins de 50% de toutes les unités de formule (II) dans la résine d'organopolysiloxane, la somme d + e soit égale à 2.

2. Compositions selon la revendication 1, **caractérisées en ce que** R² représente des radicaux hydrocarbonés cycloaliphatiques.

3. Compositions selon la revendication 1 ou 2, **caractérisées en ce que** la proportion des radicaux R² dans le composant (A) est de 5 à 100%, par rapport au nombre total de radicaux liés par SiC.

4. Compositions selon l'une ou plusieurs des revendications 1 à 3, **caractérisées en ce que** le composant (A) représente des organopolysiloxanes essentiellement linéaires de formule
R²_{f}R_{3-f}Si-O-[SiR₂-O-]ₓ[SiRR²-O]_{y}-SiR₃-_{f}R²_{f} (IV),
où R et R² présentent une signification indiquée dans la revendication 1, f peut être identique ou différent et vaut 0 ou 1, x vaut 0 ou un nombre entier, y vaut un nombre entier supérieur ou égal à 1 et les x unités [SiR₂-O] et les y unités [SiRR²-O] peuvent se trouver sous forme de blocs ou être réparties statistiquement dans la molécule.

5. Compositions selon l'une ou plusieurs des revendications 1 à 4, **caractérisées en ce que** le composant (B1) représente des charges poudreuses.

6. Compositions selon l'une ou plusieurs des revendications 1 à 5, **caractérisées en ce que** le composant (B2) représente des résines de silicone constituées d'unités de formule (II), pour lesquelles, dans moins de 30% des unités dans la résine, la somme d + e est égale à 2.

7. Compositions selon l'une ou plusieurs des revendications 1 à 6, **caractérisées en ce que** les compositions représentent celles qui sont constituées par
(A) au moins un composé organosilicié de formule (IV), et
(B) au moins un additif choisi parmi
(B1) des particules de charge et/ou
(B2) une résine d'organopolysiloxane d'unités de formule (II).

8. Agent de lavage et de nettoyage contenant les compositions selon l'une ou plusieurs des revendications 1 à 7.

9. Procédé pour enlever la mousse et/ou pour empêcher la mousse d'agents, **caractérisé en ce que** la composition selon l'une ou plusieurs des revendications 1 à 7 est ajoutée à l'agent.

10. Procédé selon la revendication 9, **caractérisé en ce que** la composition est ajoutée en des quantités de 0,1 ppm en poids à 1% en poids à l'agent moussant.
